# EUROPÄISCHE PATENTSCHRIFT

(11) **EP 4 298 337 B1**
(45) Veröffentlichungstag und Bekanntmachung des Hinweises auf die Patenterteilung: **10.06.2026**
(21) Anmeldenummer: 21708599.2
(22) Anmeldetag: 24.02.2021
(51) Int. Cl.: F03D 7/02, F03D 9/32, F03D 13/10, F03D 13/20

(54) **WINDTURBINE**
WIND TURBINE
ÉOLIENNE

(43) Veröffentlichungstag der Anmeldung: 03.01.2024
(73) Patentinhaber: Wepfer Technics AG, 8450 Andelfingen (CH)
(72) Erfinder: WEPFER, Hans, 8471 Berg-Dägerlen (CH)
(74) Vertreter: Keller Schneider Patent- und Markenanwälte AG
(86) Internationale Anmeldenummer: PCT/EP2021/054621
(87) Internationale Veröffentlichungsnummer: WO 2022/179685

(56) Entgegenhaltungen:
- EP-A1- 0 015 131
- EP-A1- 1 035 325
- EP-A1- 2 877 739
- WO-A1-2020/035606
- DE-C1- 19 646 612
- US-A1- 2009 079 161

## Beschreibung

### Technisches Gebiet

Die Erfindung betrifft eine Windturbine zur Stromerzeugung, umfassend zumindest einen durch Wind antreibbaren Rotor, einen mit dem Rotor verbundenen Generator zur Umwandlung von mechanischer Leistung des durch den Wind angetriebenen Rotors in elektrische Leistung und damit zur Stromerzeugung,

### Stand der Technik

Die Druckschrift DE 44 32 800 A1 betrifft eine Windkraftanlage, bestehend aus einem zumindest eine Windturbine tragenden Turmschaft und einem auf einem Fundament befestigten Stützkörper für den Turmschaft, wobei die Windturbine relativ zum Stützkörper um die vertikale Achse des Turmschaftes drehbar ist. Die Drehbarkeit der Windturbine bzw. Windturbinen ist erforderlich, um diese stets in die Hauptwindrichtung drehen zu können, damit wirtschaftliche Arbeitsweise gegeben ist.

Nachteilig bei bekannten Windturbinen im Stand der Technik ist, dass sie meist eine große Bauhöhe und damit zwangsläufig ein stationäres und festes Fundament aufweisen. Dieses ist aufgrund der Masse und der großen auftretenden Lasten wichtige Voraussetzung für einen zuverlässigen Betrieb und die notwendigen behördlichen Genehmigungen. Bekannte Windturbinen sind somit örtlich unflexibel und von den Windgegebenheiten abhängig.

Die Druckschrift betrifft ein selbstfahrendes Schwerlastmodultransportfahrzeug mit einer Ladefläche und einer Achsausgleichseinrichtung zur, vorzugsweise hydraulischen, Höhenverstellung der Ladefläche, wobei auf der Ladefläche ein Transportgestell zum aufrechten Transportieren eines Fundamentpfahls eines Fundaments einer Windenergieanlage, insbesondere einer Offshore-Windenergieanlage, vorzugsweise formschlüssig, befestigt ist sowie mobiles Transportsystem zum Anheben und aufrechten Transportieren eines Fundaments einer Windenergieanlage, insbesondere einer Offshore-Windenergieanlage, mit mindestens einem derartigen Schwerlastmodultransportfahrzeug.

Zusätzlich nachteilig bei bekannten Windturbinen im Stand der Technik ist, dass sie nur mit sehr großem logistischen Aufwand montiert oder örtlich verlegt werden können. Der Aufwand bindet erhebliche Mittel und erfordert auch großen zeitlichen Aufwand.

Als weiteres Beispiel beschreibt die EP 2 877 739 A1 eine Windkraftanlage, bei welcher die Windturbine an einer verschiebbaren Plattform schwenkbar befestigt ist

### Darstellung der Erfindung

Aufgabe der Erfindung ist es, eine dem eingangs genannten technischen Gebiet zugehörende Windturbine zu schaffen, welche die genannten Nachteile zumindest teilweise überwindet. Insbesondere ist es die Aufgabe der Erfindung, eine Windturbine zu schaffen, welche fortbewegbar und somit örtlich verlegbar ist.

Die Lösung der Aufgabe ist durch die Merkmale des Anspruchs 1 definiert. Gemäss der Erfindung umfasst die Windturbine zur Stromerzeugung zumindest einen durch Wind antreibbaren Rotor, einen mit dem Rotor verbundenen Generator zur Umwandlung von mechanischer Leistung des durch den Wind angetriebenen Rotors in elektrische Leistung und damit zur Stromerzeugung, ein Fahrwerk zum Fortbewegen der Windturbine, und eine Ausrichteeinrichtung zum Ausrichten der Windturbine in eine aufrechte Ausrichtung beim Fortbewegen der Windturbine mit dem Fahrwerk.

Dadurch wird beispielsweise der technische Vorteil erreicht, dass die Windturbine nach Bedarf fortbewegt werden kann.

Die Fähigkeit des Fortbewegens bringt mehrere zusätzliche Vorteile mit sich. Es besteht beispielsweise die Möglichkeit, dass die Windturbine in Abhängigkeit der Windrichtung ausgerichtet werden kann. Somit kann die Position der Windturbine bei Bedarf kurzfristig verändert werden.

Grundsätzlich ist das Fortbewegen hierbei nicht auf befestigte Flächen und Strassen beschränkt, sondern kann sich auch über Wiesen, Äcker oder sonstige Geländeabschnitte erstrecken. Damit ist die Windturbine jedoch auch Gefällen oder unregelmässigen Geländeoberflächen ausgesetzt. Dies wird durch die erfindungsgemässe Ausrichteeinrichtung zum Ausrichten der Windturbine in eine aufrechte Ausrichtung ermöglicht. Die Ausrichteeinrichtung stellt somit sicher, dass die Windturbine auch bei auftretenden Gefällen oder Unebenheiten aufrecht ausgerichtet ist.

Erfindungsgemäss umfasst die Windturbine wie eingangs erwähnt zumindest einen durch Wind antreibbaren Rotor und einen mit dem Rotor verbundenen Generator zur Umwandlung von mechanischer Leistung des durch den Wind angetriebenen Rotors in elektrische Leistung und damit zur Stromerzeugung. Das bedeutet, dass zur Stromerzeugung der vom Wind angetriebene Rotor den Generator antreibt. Dabei wird vom Generator mechanische Leistung in elektrische Leistung, d.h. in elektrische Energie pro Zeit, umgewandelt. Weiter umfasst die Windturbine einen Speicher zum Speichern von vom Generator auf diese Weise umgewandelter elektrischer Energie, wobei der Speicher mindestens eine Speichereinheit zum Speichern der elektrischen Energie umfasst. Vorzugsweise ist dabei der Speicher bzw. ist dabei die mindestens eine Speichereinheit mit dem Generator verbindbar oder verbunden, um die vom Generator umgewandelte elektrische Energie zum Speichern zu empfangen. Dabei kann die mindestens eine Speichereinheit beispielsweise eine oder mehrere wiederholt aufladbare Batterien beinhalten oder kann aus einer oder mehreren wiederholt aufladbaren Batterien bestehen. Falls der Speicher mehr als eine Speichereinheit zum Speichern der elektrischen Energie umfasst, so kann jede dieser Speichereinheiten beispielsweise eine oder mehrere wiederholt aufladbare Batterien beinhalten oder aus einer oder mehreren wiederholt aufladbaren Batterien bestehen. Die mindestens eine Speichereinheit kann aber auch anders ausgebildet sein. So kann die mindestens eine Speichereinheit beispielsweise einen oder mehrere Kondensatoren zum Speichern der elektrischen Energie beinhalten.

Nach eine weiteren Ausführungsform umfasst die Ausrichteeinrichtung eine Messeinheit zum Messen einer Abweichung der Ausrichtung der Windturbine von der aufrechten Ausrichtung. Dadurch wird beispielsweise der technische Vorteil erreicht, dass jegliche Abweichung der Ausrichtung der Windturbine unmittelbar festgestellt werden kann, wodurch geeignete Gegenmassnahmen zum Ausrichten der Windturbine in eine aufrechte Ausrichtung erfolgen können. Beispielsweise umfasst eine Messeinheit einen Gyrosensor oder ein Kreiselinstrument. Die Abweichungen können beispielsweise durch starke Sturmböen oder durch unebenes Gelände verursacht werden.

Gemäss einer besonderen Ausführungsform weist die Ausrichteeinrichtung eine Blockiereinheit zum unmittelbaren Blockieren des Rotors auf. Dadurch wird beispielsweise der technische Vorteil erreicht, dass der Rotor bei Überschreitung einer zu definierenden Abweichung sofort angehalten und blockiert werden kann. Beispielsweise ist die Blockiereinheit mit einer Rotorbremse kombinierbar. Der Blockiereinheit kommt somit eine Sicherheitsfunktion zu. Die Sicherheitsfunktion kommt beispielsweise dann zum Tragen, wenn das Fahrwerk eine große Unebenheit oder ein starkes Gefälle kompensieren muss. Dies kann insbesondere während des Fortbewegens der Windturbine ein plötzliches Kippmoment verursachen. Im ungünstigsten Fall lässt sich das Kippmoment nicht mehr mittels einer geeigneten Gegenmassnahme zum Ausrichten der Windturbine in eine aufrechte Ausrichtung korrigieren, was zum Umsturz der Windturbine führen könnte. Um in einem derartigen Fall zusätzlichen Schaden durch den drehenden Rotor zu verhindern, muss die Blockiereiheit den unmittelbaren Stillstand des Rotors bewirken.

Erfindungsgemäss weist die Windturbine eine Basiskonsole auf, welche mit dem Fahrwerk verbunden ist. Dadurch wird beispielsweise der technische Vorteil erreicht, dass ein Ausrichten der Windturbine in unmittelbarer Reaktion zum Fahrwerk möglich ist. Mit anderen Worten kann eine Ausrichtbewegung der Windturbine vom Fahrwerk ausgehend in die Basiskonsole eingeleitet werden.

Erfindungsgemäss ist die Basiskonsole gelenkartig mit dem Fahrwerk verbunden. Dadurch wird beispielsweise der technische Vorteil erreicht, dass eine Übertragung einer Bewegung vom Fahrwerk auf die Basiskonsole oder umgekehrt besonders einfach erfolgen kann. Beispielsweise handelt es sich um eine kugelgelenkartige Verbindung.

Gemäss einer zusätzlichen Ausführungsform sind der Generator und der Rotor an der Basiskonsole angeordnet. Dadurch wird beispielsweise der technische Vorteil erreicht, dass durch eine Ausrichtbewegung der Basiskonsole die gesamte Ausrichtung der Windturbine eingeleitet werden kann. Insbesondere im Zusammenhang mit der vorstehenden Ausführungsform, nach welcher die Basiskonsole gelenkartig mit dem Fahrwerk verbunden ist, kann folglich die gesamte Ausrichtung der Windturbine mit Hilfe des Fahrwerks eingeleitet werden.

Nach einer weiteren vorteilhaften Ausführungsform ist die Basiskonsole in der aufrechten Ausrichtung der Windturbine derart ausgerichtet, dass sich der Rotor in einem oberen Bereich der Basiskonsole befindet.

In einer bevorzugten Variante umfasst die Basiskonsole einen Mast, wobei der Rotor direkt oder indirekt am Mast angeordnet ist. In dieser Variante ist in der aufrechten Ausrichtung der Windturbine der Mast vorzugsweise im Wesentlichen vertikal ausgerichtet, wobei in der aufrechten Ausrichtung der Windturbine der Rotor vorzugsweise in einem oberen Bereich des Mastes angeordnet ist.

Dadurch ist eine Ausrichtbewegung der Basiskonsole auch über den Mast hinweg möglich und die gesamte Ausrichtung der Windturbine kann in identischer Form erreicht werden. Auch im Zusammenhang mit der vorstehenden Ausführungsform, nach welcher die Basiskonsole gelenkartig mit dem Fahrwerk verbunden ist, kann folglich die gesamte Ausrichtung der Windturbine einschliesslich Mast und Rotor in einem oberen Bereich des Mastes mit Hilfe des Fahrwerks eingeleitet werden.

Um das Fortbewegen der Windturbine auch in unbefestigten oder unwegsamen Geländeabschnitten zu ermöglichen, weist das Fahrwerk mindestens ein Schreitwerk auf. Ein Schreitwerk stellt eine Sonderform eines Fahrwerks dar und ist insbesondere zur einfachen Fortbewegung in unwegsamen Geländeabschnitten geeignet. Beispielsweise besteht das Schreitwerk aus einer Standfuss und einem oder mehreren Schreitfüssen. Die Schreitfüsse können beispielsweise an Schienen, an Hydraulikzylindern oder an einer Exzentervorrichtung befestigt sein. Besonders vorteilhaft ist - bedingt durch eine grosse Aufstandsfläche des Standfusses - dass die Bodenpressung sehr gering ausfällt, was beim Einsatz in gering tragfähigen Böden sehr zielführend ist. Durch die freie Drehbarkeit der Standfusses zu dem Schreitfuss kann die Windturbine auf der Stelle die Richtung beliebig ändern, was beispielsweise gegenüber Rädern oder gegenüber Raupenfahrwerken vorteilhaft ist.

Alternativ ist es jedoch ebenso denkbar, dass das Fahrwerk mit Rädern oder Raupenfahrwerken ausgebildet ist, um das Fortbewegen der der Windturbine zu realisieren.

Das Fahrwerk umfasst zumindest drei Tragarme, welche jeweils mit der Basiskonsole verbunden sind. Dadurch wird beispielsweise der technische Vorteil erreicht, dass die Windturbine stabil stehen kann. Hierbei verhindern die zumindest drei Tragarme ein Umkippen der Windturbine. Zusätzlich kann das Fahrwerk weitere Tragarme aufweisen. Beispielsweise können vier Tragarme, fünf Tragarme, sechs Tragarme oder mehr Tragarme an dem Fahrwerk angeordnet sein. Grundsätzlich nimmt die Stabilität der Windturbine im stationären Betrieb zu, je mehr Tragarme das Fahrwerk aufweist.

Nach einer besonders vorteilhaften Ausführungsform ist jedem Tragarm ein Schreitwerk zugeordnet. Dadurch wird beispielsweise der technische Vorteil erreicht, dass die einfache Fortbewegung in unwegsamen Geländeabschnitten besonders einfach erfolgen kann. Besonders geeignet ist diese Ausführungsform in gering tragfähigen Böden, wobei die freie Drehbarkeit des Schreitwerks auf der Stelle ein hohes Mass an Flexibilität für die Ausrichtung der Windturbine mit sich bringt.

Um das Fortbewegen der Windturbine zu vereinfachen weist das Fahrwerk mindestens einen Antrieb zum Bewegen der Tragarme relativ zur Basiskonsole auf. Dadurch wird beispielsweise der technische Vorteil erreicht, dass die Tragarme mittels des Antriebs vollständig vom Boden angehoben werden können. Dies kann beispielsweise den Vorteil mit sich bringen, dass der gesamte Tragarm raumgreifend angehoben und versetzt werden kann, wodurch jeder Tragarm wie das Bein einer Spinne zur Fortbewegung der Windturbine eingesetzt werden kann. Somit verfügt die Windturbine zusätzlich zum Schreitwerk über eine weitere Möglichkeit der Fortbewegung.

Gemäss ein zusätzlich vorteilhaften Ausführungsform ist die Ausrichteeinrichtung dazu ausgebildet, die Ausrichtung der Basiskonsole mittels Betätigung des zumindest einen Antriebs anzupassen, um die Windturbine in die aufrechte Ausrichtung auszurichten. Dadurch wird beispielsweis der technische Vorteil erreicht, dass durch ein Ausrichten der Basiskonsole ein Ausrichten der Windturbine möglich ist. Mit anderen Worten kann der Antrieb eine Ausrichtbewegung der Windturbine in die Basiskonsole und damit in die gesamte Windturbine einleiten. Hilfreich ist in diesem Zusammenhang, dass die Basiskonsole gelenkartig mit dem Fahrwerk verbunden ist.

Nach einer weiteren besonderen Ausführungsform weist die Windturbine einen Speicher zum Speichern von durch die Windturbine erzeugten elektrischen Strom auf. Der Speicher umfasst mindestens eine Speichereinheit zum Speichern der elektrischen Energie. Vorzugsweise ist dabei der Speicher bzw. ist dabei die mindestens eine Speichereinheit mit dem Generator verbindbar oder verbunden, um die vom Generator umgewandelte elektrische Energie zum Speichern zu empfangen. Dabei kann die mindestens eine Speichereinheit beispielsweise eine oder mehrere wiederholt aufladbare Batterien beinhalten oder kann aus einer oder mehreren wiederholt aufladbaren Batterien bestehen. Falls der Speicher mehr als eine Speichereinheit zum Speichern der elektrischen Energie umfasst, so kann jede dieser Speichereinheiten beispielsweise eine oder mehrere wiederholt aufladbare Batterien beinhalten oder aus einer oder mehreren wiederholt aufladbaren Batterien bestehen.

Um die Stabilität der Windturbine im Betrieb zu erhöhen umfasst der Speicher eine Mehrzahl an Speichereinheiten zum Speichern von durch die Windturbine erzeugten elektrischen Strom, wobei an jedem Tragarm eine Speichereinheit anordenbar ist. Erfindungsgemäss umfasst die Trageinheit zumindest drei Tragarme. Dabei ist wenigstens eine der mindestens einen Speichereinheit an einem der zumindest drei Tragarme anordenbar oder angeordnet, um den einen der zumindest drei Tragarme mit ihrem Eigengewicht zu beaufschlagen. Unabhängig davon, wie die eine der mindestens einen Speichereinheit genau ausgebildet ist, führt die Beaufschlagung des einen der zumindest drei Tragarme mit dem Eigengewicht der wenigstens einen der mindestens einen Speichereinheit dazu, dass die Windturbine stabiler auf den Tragarmen und damit der Trageinheit steht. Wenn die Trageinheit zum Abstützen der Windturbine auf einem Untergrund, insbesondere einem Boden, im Betrieb der Windturbine zur Stromerzeugung dient, so kann damit erreicht werden, dass die Windturbine im Betrieb der Windturbine zur Stromerzeugung stabiler steht, ohne dass zum Erreichen dieser Stabilität eine aufwändige Verankerung der Windturbine im Boden erforderlich ist. Wenn die Trageinheit zum Fortbewegen der Windturbine dient, so kann durch die Beaufschlagung des einen der zumindest drei Tragarme mit dem Eigengewicht der wenigstens einen der mindestens einen Speichereinheit erreicht werden, dass die Windturbine einfacher stabil und damit sicher fortbewegt werden kann, ohne dass zum Erreichen dieser Stabilität eine aufwändige Fahrwerkskonstruktion erforderlich ist. Somit hat die erfindungsgemässe Windturbine den Vorteil, dass sie wesentlich einfacher zu installieren ist.

Bevorzugt umfasst der Speicher drei Speichereinheiten zum Speichern der elektrischen Energie, wobei jede der drei Speichereinheiten an einem anderen der mindestens drei Tragarme anordenbar oder angeordnet ist, um den jeweiligen Tragarm mit dem Eigengewicht der jeweiligen Speichereinheit zu beaufschlagen. Dadurch wird erreicht, dass die Windturbine stabiler auf den Tragarmen und damit der Trageinheit steht. Wenn die Trageinheit zum Abstützen der Windturbine auf dem Untergrund, insbesondere dem Boden, im Betrieb der Windturbine zur Stromerzeugung dient, so kann damit erreicht werden, dass die Windturbine im Betrieb der Windturbine zur Stromerzeugung deutlich stabiler steht, ohne dass zum Erreichen dieser Stabilität eine aufwändige Verankerung der Windturbine im Boden erforderlich ist. Wenn die Trageinheit zum Fortbewegen der Windturbine dient, so kann damit erreicht werden, dass die Windturbine erheblich einfacher stabil und damit sicher fortbewegt werden kann, ohne dass zum Erreichen dieser Stabilität eine aufwändige Fahrwerkskonstruktion erforderlich ist. Somit hat dies den Vorteil, dass die Windturbine wesentlich einfacher zu installieren ist und zudem sicherer betrieben werden kann.

In einer besonders bevorzugten Variante davon umfasst der Speicher eine gleiche Anzahl Speichereinheiten zum Speichern der elektrischen Energie wie die Trageinheit Tragarme umfasst, wobei jede der Speichereinheiten an einem anderen der Tragarme anordenbar oder angeordnet ist, um den jeweiligen Tragarm mit dem Eigengewicht der jeweiligen Speichereinheit zu beaufschlagen. Dies hat aus den bereits vorgehend erläuterten Gründen den Vorteil, dass die Windturbine eine besonders hohe Stabilität aufweist und entsprechend besonders einfach zu installieren ist und sicherer betrieben werden kann.

In einer Variante dazu umfasst der Speicher eine andere Anzahl Speichereinheiten zum Speichern der elektrischen Energie als die Trageinheit Tragarme umfasst. In einer weiteren Variante umfasst der Speicher wenigstens zwei Speichereinheiten, welche an einem gleichen der Tragarme anordenbar oder angeordnet sind, um den jeweiligen Tragarm mit dem Eigengewicht der jeweiligen zwei Speichereinheiten zu beaufschlagen.

Alternativ zu diesen Varianten umfasst der Speicher nur eine Speichereinheit.

Unabhängig davon, wie viele Speichereinheiten der Speicher umfasst, ist vorteilhafterweise jede der wenigstens einen der mindestens einen an einem der zumindest drei Tragarme anordenbaren oder angeordneten Speichereinheiten in einem distalen Bereich des jeweiligen Tragarms anordenbar oder angeordnet, um den jeweiligen Tragarm mit dem Eigengewicht der jeweiligen Speichereinheit zu beaufschlagen. Dies hat zum einen den Vorteil, dass die Stabilität der Windturbine erhöht wird und die Windturbine entsprechend besonders einfach zu installieren ist und sicher betrieben werden kann. Zum anderen hat dies den Vorteil, dass die Speichereinheiten einfacher zugänglich sind. Dies vereinfacht den Betrieb der Windturbine besonders, wenn die mindestens eine Speichereinheit auswechselbar ausgebildet ist. Diese Vorteile sind besonders ausgeprägt, wenn jede der wenigstens einen der mindestens einen an einem der zumindest drei Tragarme anordenbaren oder angeordneten Speichereinheiten an einem distalen Ende des jeweiligen Tragarms anordenbar oder angeordnet ist, um den jeweiligen Tragarm mit dem Eigengewicht der jeweiligen Speichereinheit zu beaufschlagen.

Alternativ dazu besteht aber auch die Möglichkeit, dass nur eine oder keine der wenigstens einen der mindestens einen an einem der zumindest drei Tragarmen anordenbaren oder angeordneten Speichereinheiten an einem distalen Bereich des jeweiligen Tragarms anordenbar oder angeordnet ist, um den jeweiligen Tragarm mit dem Eigengewicht der jewieligen Speichereinheit zu beaufschlagen.

Gemäss einer besonders vorteilhaften drauf aufbauenden Ausführungsform sind die Speichereinheiten auswechselbar ausgebildet. Dies hat den Vorteil, dass die mindestens eine Speichereinheit im Bedarfsfall ausgewechselt werden kann. Dies ist beispielsweise vorteilhaft, wenn eine Speichereinheit beschädigt ist. So kann dadurch die Speichereinheit ersetzt werden oder zur Reparatur von der Windturbine gelöst werden. Weiter hat dies den Vorteil, dass die mindestens eine Speichereinheit an einen anderen Ort transportiert werden kann, wo die in der Speichereinheit gespeicherte elektrische Energie benötigt wird bzw. abgegeben werden soll. Insbesondere wenn die Trageinheit ein Fahrwerk zum Fortbewegen der Windturbine ist, kann dadurch auf einfache Art und Weise erreicht werden, dass die im Betrieb der Windturbine während der Stromerzeugung durch den Generator umgewandelte elektrische Energie in der ausgewechselten Speichereinheit gespeichert auf einfache Art dorthin gebracht werden kann, wo die elektrische Energie benötigt wird, ohne dass die Windturbine jedes Mal, wenn die Windturbine an eine andere Position bewegt worden ist, auf aufwändige Art und Weise mittels Kabel an ein Stromnetz angeschlossen werden muss.

Alternativ dazu besteht aber auch die Möglichkeit, dass die Speichereinheit nicht auswechselbar ausgebildet ist.

Nach einer weiterführenden Ausführungsform weist der Speicher eine Schnittstelle zur Versorgung eines Verbrauchers mit elektrischem Strom auf. Dadurch wird beispielsweise der technische Vorteil erreicht, dass der Speicher oder die mindestens eine Speichereinheit gespeicherte Energie direkt mit einem Verbraucher verbunden werden können, um diesen mit elektrischem Strom zu versorgen. Ein Verbraucher könnte beispielsweise eine Zwischenspeicher wie beispielsweise eine E-Tankstelle, ein Elektrofahrzeug oder ein Haushaltsanschluss sein. Im Falle eines Haushaltsanschlusses könnte mittels der Schnittstelle der Energiebedarf eines Einfamilienhauses oder eines Mehrfamilienhauses gedeckt werden.

Bevorzugt weist jeder der zumindest drei Tragarme, an welchem eine der mindestens einen Speichereinheit anordenbar oder angeordnet ist, eine Kopplungseinrichtung zum Ankoppeln und damit zum Anschliessen und Tragen der einen der mindestens einen Speichereinheit auf. Dies hat den Vorteil, dass am entsprechenden Tragarm besonders einfach eine Speichereinheit angeordnet werden kann. Dadurch werden die Installation sowie der Betrieb der Windturbine vereinfacht. Dabei ist unerheblich, ob die Kopplungseinrichtung zum Tragen einer der mindestens einen Speichereinheit auf, im oder unter dem jeweiligen Tragarm ausgebildet ist. Vorteilhafterweise ist die Kopplungseinrichtung jedoch ausgebildet, um den jeweiligen Tragarm mit dem Eigengewicht der von der Kopplungseinrichtung getragenen Speichereinheit zu beaufschlagen.

Vorzugsweise weist die Kopplungseinrichtung ein Gehäuse zur Aufnahme der anzukoppelnden oder angekoppelten Speichereinheit in einem Inneren des Gehäuses auf bzw. weisen die Kopplungseinrichtungen je ein Gehäuse zur Aufnahme der an der jeweiligen Kopplungseinrichtung anzukoppelnden oder angekoppelten Speichereinheit in einem Inneren des Gehäuses auf. Dies hat den Vorteil, dass die mindestens eine Speichereinheit optimal geschützt am entsprechenden Tragarm angeordnet werden kann.

In einer Variante dazu weist die Kopplungseinrichtung bzw. weisen die Kopplungseinrichtungen hingegen kein derartiges Gehäuse auf.

Alternativ zu diesen Varianten besteht aber auch die Möglichkeit, dass nicht jeder bzw. dass keiner der zumindest drei Tragarme, an welchem eine der mindestens einen Speichereinheit anordenbar oder angeordnet ist, eine Kopplungseinrichtung zum Ankoppeln und damit zum Anschliessen und Tragen der einen der mindestens einen Speichereinheiten aufweist.

Vorteilhafterweise wird die erfindungsgemässe Windturbine in einer Anordnung mit einer Einspeiseeinrichtung mit einer Annahmeeinrichtung zur Annahme einer von der Windturbine getrennten, d.h. nicht an einem der Tragarme der Windturbine angeordneten bzw. von den Tragarmen der Windturbine und damit von der Windturbine entfernten, der mindestens einen Speichereinheit der Windturbine eingesetzt, wobei die Annahmeeinrichtung einen Speichereinheitsanschluss zum Anschliessen der von der Windturbine getrennten Speichereinheit an die Einspeiseeinrichtung aufweist, um in der an den Speichereinheitsanschluss angeschlossenen Speichereinheit gespeicherte elektrische Energie der Einspeiseeinrichtung zur Verfügung zu stellen. Eine solche Anordnung mit der erfindungsgemässen Windturbine und der Einspeiseeinrichtung hat den Vorteil, dass die mit dem Generator umgewandelte elektrische Energie, welche in einer der mindestens einen Speichereinheit der Windturbine gespeichert ist, auf einfache Art und Weise zur Einspeiseeinrichtung gebracht werden kann, indem die betreffende Speichereinheit von der Windturbine getrennt wird, zur Einspeiseeinrichtung gebracht wird und an den Speichereinheitsanschluss der Annahmeeinrichtung der Einspeiseeinrichtung angeschlossen wird.

Vorteilhafterweise weist die Annahmeeinrichtung eine Aufnahme zur Aufnahme der von der Windturbine getrennten der mindestens einen Speichereinheit auf. Dies hat den Vorteil, dass die betreffende Speichereinheit einfach und sicher an der Einspeiseeinrichtung angeschlossen werden kann, indem die betreffende Speichereinheit in die Aufnahme der Annahmeeinrichtung geführt wird. Dies ist insbesondere für einen sicheren, zuverlässigen und unfallfreien Betrieb der Einspeiseeinrichtung vorteilhaft.

Alternativ dazu besteht aber auch die Möglichkeit, dass die Annahmeeinrichtung keine derartige Annahme zur Aufnahme der von der Windturbine getrennten der mindestens einen Speichereinheit aufweist.

Bevorzugt umfasst die Einspeiseeinrichtung einen Wechselrichter, um die von der an den Speichereinheitsanschluss angeschlossenen Speichereinheit der Einspeiseeinrichtung zur Verfügung gestellte elektrische Energie in Wechselstrom umzuwandeln. Dies ist insbesondere dann vorteilhaft, wenn die elektrische Energie in der Form von Wechselstrom benötigt wird bzw. genutzt werden soll.

Besonders bevorzugt ist dabei die Einspeiseeinrichtung an ein Stromnetz angeschlossen, um den Wechselstrom in das Stromnetz einzuspeisen.

In einer Variante davon besteht jedoch auch die Möglichkeit, dass die Einspeiseeinrichtung nicht an ein Stromnetz angeschlossen ist.

In einer Alternative zu diesen Varianten umfasst die Einspeiseeinrichtung keinen Wechselrichter, um die von der an den Speichereinheitsanschluss angeschlossenen Speichereinheit der Einspeiseeinrichtung zur Verfügung gestellte elektrische Energie in Wechselstrom umzuwandeln.

Vorzugsweise ist die Einspeiseeinrichtung eine Elektrofahrzeugtankstelle zum Tanken von Elektrofahrzeugen mit von der an den Speichereinheitsanschluss angeschlossenen Speichereinheit der Einspeiseeinrichtung zur Verfügung gestellter elektrischer Energie. Die Elektrofahrzeuge sind dabei vorzugsweise wenigstens eines von Elektrofahrräder, d.h. elektrisch angetriebene Fahrräder, Elektromotorräder, d.h. elektrisch angetriebene Motorräder, Elektroautos, d.h. elektrisch angetriebene Personenkraftwagen, Elektrobusse, d.h. elektrisch angetriebene Omnibusse und Elektrolastwagen, d.h. elektrisch angetriebene Lastkraftwagen.

Alternativ dazu besteht aber auch die Möglichkeit, dass die Einspeiseeinrichtung keine Elektrofahrzeugtankstelle zum Tanken von Elektrofahrzeugen mit von der an den Speichereinheitsanschluss angeschlossenen Speichereinheit der Einspeiseeinrichtung zur Verfügung gestellter elektrischer Energie ist.

Bevorzugt umfasst die Anordnung wenigstens ein Fahrzeug zum Transport einer der mindestens einen Speichereinheit der Windturbine von der Windturbine zur Einspeiseeinrichtung, insbesondere zur Annahmeeinrichtung der Einspeiseeinrichtung, und zum Transport der einen der mindestens einen Speichereinheit der Windturbine von der Einspeiseeinrichtung, insbesondere der Annahmeeinrichtung der Einspeiseeinrichtung, zur Windturbine. Dies hat den Vorteil, dass die Speichereinheit auf einfache Art und Weise von der Windturbine zur Einspeiseeinrichtung bzw. von der Einspeiseeinrichtung zur Windturbine gebracht werden kann.

Besonders bevorzugt ist das wenigstens ein Fahrzeug ein motorisiertes Fahrzeug. Dies hat den Vorteil, dass die Speichereinheit besonders einfach von der Windturbine zur Einspeiseeinrichtung bzw. von der Einspeiseeinrichtung zur Windturbine gebracht werden kann. In einer Variante davon ist das wenigstens ein Fahrzeug kein motorisiertes Fahrzeug. In dieser Variante kann das wenigstens ein Fahrzeug beispielsweise ein Anhänger sein, welcher mit einem motorisierten Fahrzeug wie beispielsweise einem Personenkraftwagen oder einem Traktor von der Windturbine zur Einspeiseeinrichtung bzw. von der Einspeiseeinrichtung zur Windturbine bewegt werden kann, um die mindestens eine Speichereinheit zu transportieren.

Vorteilhafterweise umfasst das wenigstens ein Fahrzeug Mittel zum Anbringen und damit zum Anordnen einer mit dem Fahrzeug transportierten Speichereinheit an einem der zumindest drei Tragarme. Dies hat den Vorteil, dass der Betrieb der Anordnung mit der Windturbine und der Einspeiseeinrichtung vereinfacht wird. Alternativ dazu besteht aber auch die Möglichkeit, dass das wenigstens ein Fahrzeug keine Mittel zum Anbringen und damit zum Anordnen einer mit dem Fahrzeug transportierten Speichereinheit an einem der zumindest drei Tragarme umfasst.

Vorteilhafterweise umfasst das wenigstens ein Fahrzeug Mittel zum Entfernen einer am einen der zumindest drei Tragarme angeordneten Speichereinheit vom jeweiligen Tragarm. Dies hat den Vorteil, dass der Betrieb der Anordnung mit der Windturbine und der Einspeiseeinrichtung vereinfacht wird. Alternativ dazu besteht aber auch die Möglichkeit, dass das wenigstens ein Fahrzeug keine Mittel zum Entfernen einer am einen der zumindest drei Tragarme angeordneten Speichereinheit vom jeweiligen Tragarm umfasst.

Vorteilhafterweise umfasst das wenigstens ein Fahrzeug oder die Annahmeeinrichtung Mittel zum Anbringen und damit zum Anschliessen einer mit dem wenigstens einen Fahrzeug transportierten Speichereinheit am Speichereinheitsanschluss der Annahmeeinrichtung. Dies hat den Vorteil, dass der Betrieb der Anordnung mit der Windturbine und der Einspeiseeinrichtung vereinfacht wird. Alternativ dazu besteht aber auch die Möglichkeit, dass weder das wenigstens ein Fahrzeug noch die Annahmeeinrichtung Mittel zum Anbringen und damit zum Anschliessen einer mit dem wenigstens einen Fahrzeug transportierten Speichereinheit am Speichereinheitsanschluss der Annahmeeinrichtung umfasst.

Vorteilhafterweise umfasst das wenigstens ein Fahrzeug oder die Annahmeeinrichtung Mittel zum Entfernen und damit zum Trennen einer mit dem wenigstens einen Fahrzeug transportierten Speichereinheit vom Speichereinheitsanschluss der Annahmeeinrichtung. Dies hat den Vorteil, dass der Betrieb der Anordnung mit der Windturbine und der Einspeiseeinrichtung vereinfacht wird. Alternativ dazu besteht aber auch die Möglichkeit, dass weder das wenigstens ein Fahrzeug noch die Annahmeeinrichtung Mittel zum Entfernen und damit zum Trennen einer mit dem wenigstens einen Fahrzeug transportierten Speichereinheit vom Speichereinheitsanschluss der Annahmeeinrichtung umfasst.

In einer Variation dieser Varianten umfasst die Anordnung kein Fahrzeug zum Transport einer der mindestens einen Speichereinheit der Windturbine von der Windturbine zur Einspeiseeinrichtung und zum Transport der einen der mindestens einen Speichereinheit der Windturbine von der Einspeiseeinrichtung zur Windturbine.

In einer bevorzugten Alternative zu diesen Varianten mit der Anordnung mit der Windturbine und der Einspeiseeinrichtung wird die erfindungsgemässe Windturbine hingegen separat, d.h. nicht in einer derartigen Anordnung zusammen mit einer Einspeiseeinrichtung, betrieben und genutzt.

Um die Windturbine möglichst einfach auf eine aktuelle Windrichtung anzupassen, ist die Windturbine um eine vertikale Längsachse rotierbar ausgebildet. Dadurch wird beispielsweise der technische Vorteil erreicht, dass eine schnelle Anpassung an sich ändernde Windverhältnisse möglich ist, ohne dass die Windturbine einschliesslich des gesamten Fahrwerks bewegt werden muss. Diese Eigenschaft wird im Stand der Technik auch als Yaw-Bewegung bezeichnet. Beispielsweise kann sich der Rotor samt Generator um die Längsachse des Mastes drehen. Denkbar ist beispielsweise auch eine Messvorrichtung zum Erfassen der aktuellen Windrichtung und einen Antrieb zum Verstellen des Rotors um eine vertikale Längsachse der Turbine.

Gemäss einer weiteren Ausführungsform ist ein Neigungswinkel jeden Rotorblattes im Verhältnis zur Windanströmungsrichtung einstellbar ausgebildet. Dadurch wird beispielsweise der technische Vorteil erreicht, dass der Wirkungsgrad der Windturbine veränderbar ist. Beispielsweise kann bei geringer Windgeschwindigkeit ein anderer Neigungswinkel vorteilhaft sein, als bei einer höheren Windgeschwindigkeit.

Beispielsweise kann es in einer Unwettersituation bei hohen Windgeschwindigkeiten oder unkontrollierbaren Böen vorteilhaft sein, die Windangriffsfläche der Rotorblätter zu reduzieren, um die Stabilität der Windturbine während des Unwetters sicherzustellen. Im Stand der Technik wird das Variieren des Neigungswinkels der Rotorblätter auch als Pitch-Bewegung bezeichnet.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:
- Fig. 1: eine Windturbine zur Stromerzeugung nach einer ersten Ausführungsform;
- Fig. 2: eine Windturbine zur Stromerzeugung nach einer zweiten Ausführungsform;
- Fig. 3: eine Windturbine zur Stromerzeugung nach einer dritten Ausführungsform; und
- Fig. 4: eine schematische Darstellung einer Anordnung mit der anhand der Figur 1 beschriebenen erfindungsgemässen Windturbine sowie mit einer Einspeiseeinrichtung mit einer Annahmeeinrichtung zur Annahme einer von der Windturbine getrennten Speichereinheit der Windturbine.

Grundsätzlich sind in den Figuren gleiche Teile mit gleichen Bezugszeichen versehen.

### Wege zur Ausführung der Erfindung

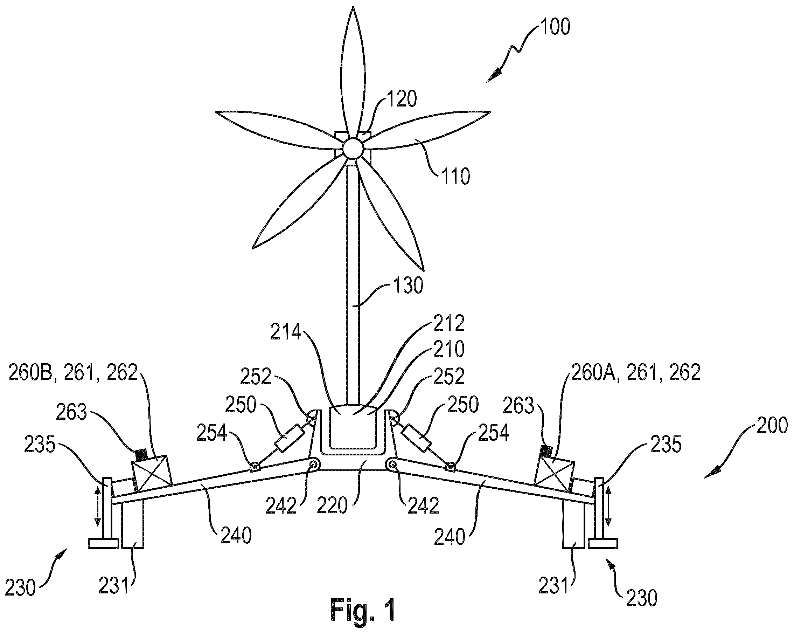

Die Fig. 1 zeigt eine Windturbine 100 zur Stromerzeugung nach einer ersten Ausführungsform.

Die Windturbine 100 hat einen durch Wind antreibbaren Rotor 110, welche unmittelbar mit einem Generator 120 verbunden ist. Der Generator 120 dient der Umwandlung von mechanischer Leistung des rotierenden Rotors 110 in elektrische Leistung und damit zur Stromerzeugung. Der Rotor 110 und der zugeordnete Generator 120 sind über einen Mast 130 mit einem Fahrwerk 200 verbunden. Das Fahrwerk 200 dient der Fortbewegung der Windturbine 100 und wird nachfolgend detaillierter beschrieben.

Das Fahrwerk 200 der Windturbine 100 umfasst eine zentrale Basiskonsole 220 und zumindest drei Tragarme 240, wobei in der Fig. 1 lediglich zwei Tragarme 240 in einer Seitenansicht gezeigt sind. Jeder der Tragarme 240 ist gegenüber der Basiskonsole 220 gelenkig gelagert, wobei hierfür eine gelenkartige Verbindung 242 angeordnet ist.

Zusätzlich umfasst das Fahrwerk 200 Antriebe 250, wobei jeweils ein Antrieb 250 einem Tragarm 250 zugeordnet ist. Jeder Antrieb 250 umfasst eine basiskonsolenseitige Basiskonsolenanbindung 252 und eine tragarmseitige Tragarmanbindung 254. Durch das Betätigen eines Antriebs 250 lässt sich somit der zugeordnete Tragarm 240 um die gelenkartige Verbindung 242 relativ zur Basiskonsole 220 bewegen. In Abhängigkeit der vorherrschenden Lastverteilung der Windturbine 100 auf alle bestehenden Tragarme 240 kann somit durch das Betätigen eines einzelnen Antriebs 250 die Ausrichtung der Basiskonsole 220 verändert werden. Alternativ oder zusätzlich kann durch das Betätigen eines einzelnen Antriebs 250 der zugeordnete Tragarm 240 angehoben werden.

Die Basiskonsole 220 lagert eine Ausrichteeinheit 210, welche mit dem Mast 130 und damit mit dem Rotor 110 und dem Generator 120 der Windturbine 100 verbunden ist. Durch die Ausrichtung der Basiskonsole 220 wird somit die Ausrichtung der gesamten Windturbine 100 gesteuert. Hierbei ist die Ausrichteeinrichtung 210 dazu ausgebildet, die Ausrichtung der Basiskonsole 220 mittels Betätigung zumindest einen Antriebs 250 anzupassen. So kann die Windturbine 100 kontinuierlich in einer aufrechten Ausrichtung gehalten werden.

Die Ausrichteeinrichtung 210 umfasst eine Messeinheit 212 zum Messen einer Abweichung der Ausrichtung der Windturbine 100. Ausgehend von der Messeinheit 212 kann somit die Abweichung des Mastes 130 von der aufrechten Ausrichtung bestimmt werden. In Abhängigkeit dieser Abweichung kann die Ausrichteeinheit 210 dann über den oder die Antriebe 250 die Ausrichtung der Basiskonsole 220 verändern, um die Abweichung des Mastes 130 von der aufrechten Ausrichtung zu korrigieren.

Zusätzlich umfasst die Ausrichteeinheit 210 eine Blockiereinheit 214, deren Aufgabe es ist, den Rotor 110 unter bestimmten Voraussetzungen zu blockieren. Beispielsweise kann der Fall auftreten, dass die Abweichung des Mastes 130 von der aufrechten Ausrichtung, welche von der Messeinheit 212 festgestellt wird, zu stark ausgeprägt ist. In diesem Fall wirkt die Blockiereinheit 214 wie eine Notaus-Einrichtung, wobei die Ausrichteeinheit 210 mittels einer Rotorbremse den Rotor abbremst und dann das unmittelbare Blockieren des Rotors 110 veranlasst. Beispielsweise kann die Blockiereinheit 214 eine mechanische Verriegelung umfassen, welche die Welle des Rotors 110 mechanisch blockiert.

Im Betrieb der Windturbine 100 ist die Basiskonsole 220 in der aufrechten Ausrichtung der Windturbine 100 derart ausgerichtet, dass sich der Rotor 110 in einem oberen Bereich der Basiskonsole 220 befindet.

Am distalen Ende jeden Tragarms 240 umfasst das Fahrwerk 200 ein Schreitwerk 230. Die Schreitwerke 230 eignen sich in besonderer Form für eine einfache Fortbewegung in unwegsamen Geländeabschnitten. Insbesondere ist eine freie Drehbarkeit des Schreitwerks 230 auf der Stelle gegeben, was ein hohes Mass an Flexibilität für die Ausrichtung der Windturbine 100 mit sich bringt. Das Schreitwerk 230 umfasst zumindest einen Standfuss 231 und zumindest einen Schreitfuss 235. Der Schreitfuss 235 ist beispielsweise auf einer Kreisbahn bewegbar, um dadurch kleine aber raumgreifende Schritte zu ermöglichen.

Die Windturbine 100 umfasst ausserdem einen Speicher 260 zum Speichern von vom Generator 120 umgewandelter elektrischer Energie. Dieser Speicher 260 umfasst drei Speichereinheiten 260A, 260B, 260C zum Speichern der elektrischen Energie. Bei diesen Speichereinheiten 260A, 260B, 260C handelt es sich um wiederholt aufladbare Batterien. Jede der Speichereinheiten 260A, 260B, 260C ist an einem anderen der drei Tragarme 240 angeordnet bzw. an einem anderen der drei Tragarme 240 anordenbar, um den jeweiligen Tragarm 240 mit ihrem Eigengewicht zu beaufschlagen. Somit umfasst der Speicher 260 eine gleiche Anzahl Speichereinheiten 260A, 260B, 260C zum Speichern der elektrischen Energie wie die Trageinheit Tragarme 240 umfasst, wobei jede der Speichereinheiten 260A, 260B, 260C an einem anderen der Tragarme 240 anordenbar oder angeordnet ist, um den jeweiligen Tragarm 240 mit dem Eigengewicht der jeweiligen Speichereinheit 260A, 260B, 260C zu beaufschlagen. Dadurch wird erreicht, dass die Windturbine 100 besonders stabil auf den Tragarmen 240 und damit auf der Trageinheit steht. Diese Stabilität ist zusätzlich erhöht, indem jede der an einem der drei Tragarme 240 anordenbaren oder angeordneten Speichereinheiten 260A, 260B, 260C an einem distalen Ende des jeweiligen Tragarms 240 und damit in einem distalen Bereich des jeweiligen Tragarms 240 anordenbar bzw. angeordnet ist, um den jeweiligen Tragarm 240 mit dem Eigengewicht der jeweiligen Speichereinheit 260A, 260B, 260C zu beaufschlagen.

Die Speichereinheiten 260A, 260B, 260C sind auswechselbar ausgebildet und können im Bedarfsfall ausgewechselt werden. So kann dadurch eine beschädigte Speichereinheit 260A, 260B, 260C ersetzt werden oder zur Reparatur von der Windturbine 100 entfernt werden. Genauso kann dadurch aber auch eine der Speichereinheiten 260A, 260B, 260C an einen anderen Ort transportiert werden, wo die in der entsprechenden Speichereinheit 260A, 260B, 260C gespeicherte elektrische Energie benötigt wird bzw. abgegeben werden soll.

Um diese Auswechselbarkeit der Speichereinheiten 260A, 260B, 260C zu vereinfachen, weist jeder der drei Tragarme 240 eine Kopplungseinrichtung 261 zum Ankoppeln und damit zum Anschliessen und Tragen einer der Speichereinheiten 260A, 260B, 260C auf. Dabei weist jede Kopplungseinrichtung 261 ein Gehäuse 262 zur Aufnahme der anzukoppelnden oder angekoppelten Speichereinheit 260A, 260B, 260C in einem Inneren des Gehäuses 262 auf.

Der Speicher 260 weist ausserdem eine Schnittstelle 263 zur Versorgung eines Verbrauchers mit elektrischem Strom auf. Dadurch können die Speichereinheiten 260A, 260B, 260C direkt mit einem Verbraucher verbunden werden, um diesen mit in den Speichereinheiten 260A, 260B, 260C gespeicherter elektrischer Energie und damit mit elektrischem Strom zu versorgen.

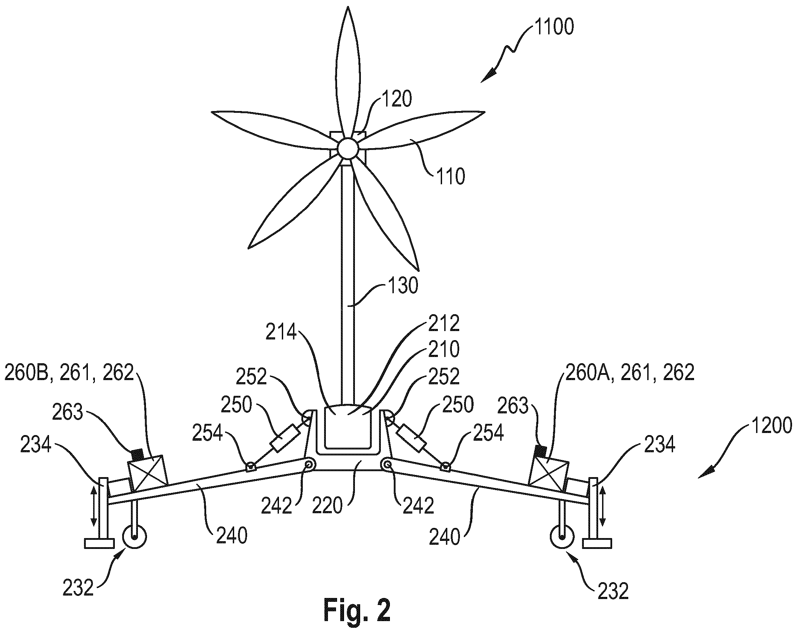

Die Fig. 2 zeigt eine Windturbine 1100 zur Stromerzeugung nach einer zweiten Ausführungsform.

Die identischen Bezugszeichen der vorausgehenden Fig. 1 beschreiben identische Merkmale. Auf eine wiederholte Beschreibung wird an dieser Stelle verzichtet.

Im Gegensatz zu vorausgehenden Fig. 1 umfasst das distale Ende jeden Tragarms 240 ein Radfahrwerk 232. Der Vorteil des Radfahrwerks 232 gegenüber einem Schreitwerk 230 der vorausgehenden Fig.1 liegt in der grösseren Fortbewegungsgeschwindigkeit. Beispielsweise ist dem Radfahrwerk 232 ein Stützelement 234 zugeordnet, um die Last der Windturbine 1100 nur zum Zweck des Fortbewegens auf das Radfahrwerk 232 aufzubringen. Für den stationären Betrieb der Windturbine 1100 kann das Stützelement 234 jeden Tragarms 240 derart abgesenkt werden, dass eine stabile Position der Windturbine 100 gegeben ist.

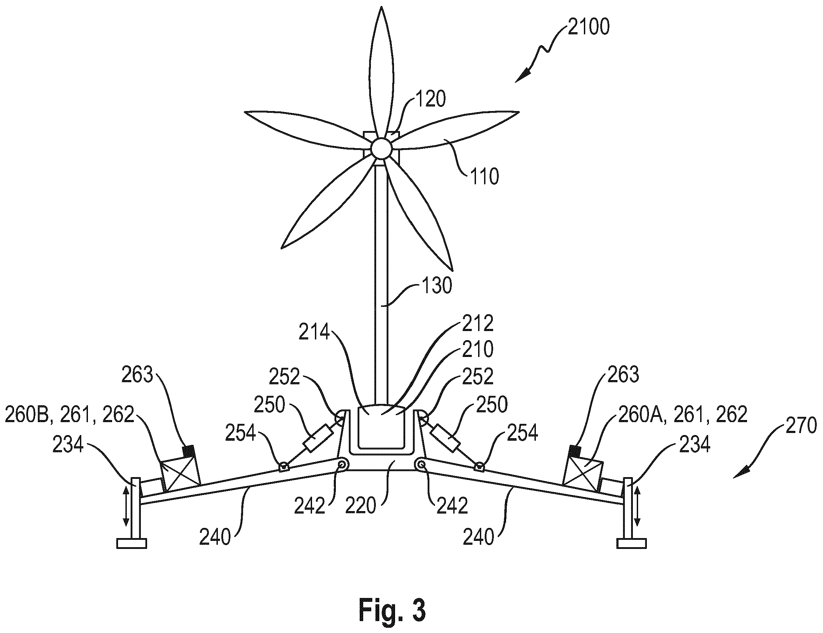

Die Fig. 3 zeigt eine Windturbine 2100 zur Stromerzeugung nach einer dritten Ausführungsform.

Die identischen Bezugszeichen der vorausgehenden Fig. 1 und 2 beschreiben identische Merkmale. Auf eine wiederholte Beschreibung wird an dieser Stelle verzichtet.

Im Gegensatz zu vorausgehenden Fig. 1 und 2 umfasst das distale Ende jeden Tragarms 240 nur ein Stützelement 234. Das Stützelement 234 ermöglicht ein Anheben oder ein Absenken des jeweiligen Tragarms 240 und damit der gesamten Windturbine 100.

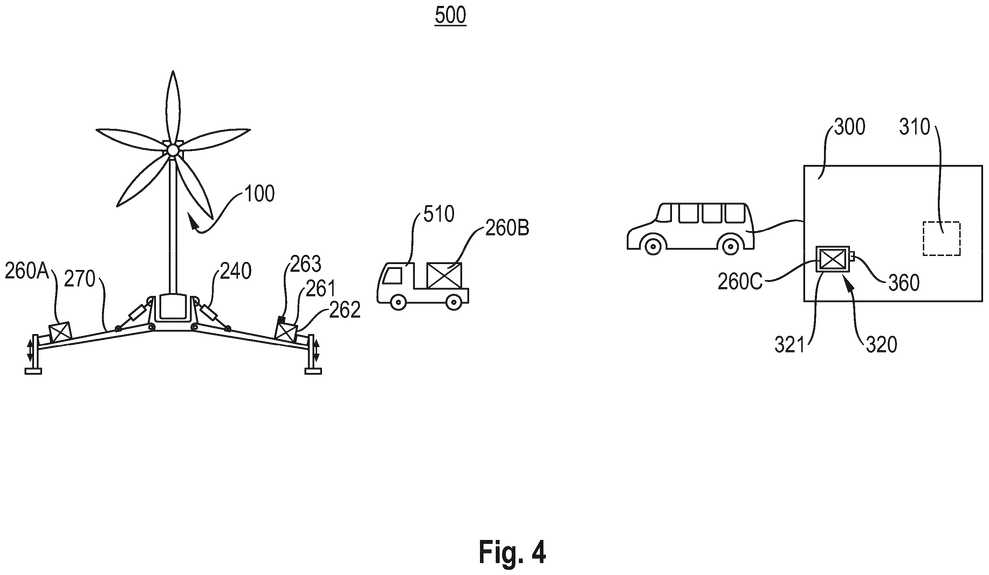

Die Figur 4 zeigt eine schematische Darstellung einer Anordnung 500 mit der anhand der Figur 1 beschriebenen erfindungsgemässen Windturbine 100 sowie mit einer Einspeiseeinrichtung 300 mit einer Annahmeeinrichtung 320 zur Annahme einer von der Windturbine 100 getrennten, d.h. nicht an einem der Tragarme 240 der Windturbine 100 angeordneten bzw. von den Tragarmen 240 der Windturbine 100 und damit von der Windturbine 100 entfernten, Speichereinheit 260A, 260B, 260C der Windturbine 100, wobei die Annahmeeinrichtung 320 einen Speichereinheitsanschluss 360 zum Anschliessen der von der Windturbine 100 getrennten Speichereinheit 260A, 260B, 260C an die Einspeiseeinrichtung 300 aufweist, um in der an den Speichereinheitsanschluss 360 angeschlossenen Speichereinheit 260A, 260B, 260C gespeicherte elektrische Energie der Einspeiseeinrichtung 300 zur Verfügung zu stellen. Dabei weist die Annahmeeinrichtung 320 eine Aufnahme 321 zur Aufnahme der von der Windturbine 100 getrennten Speichereinheit 260A, 260B, 260C auf. Dadurch kann die betreffende Speichereinheit 260A, 260B, 260C einfach und sicher an der Einspeiseeinrichtung 300 angeschlossen werden, indem die betreffende Speichereinheit 260A, 260B, 260C in die Aufnahme 321 der Annahmeeinrichtung 320 geführt wird.

Die Einspeiseeinrichtung 300 umfasst einen Wechselrichter 310, um die von der an den Speichereinheitsanschluss 360 angeschlossenen Speichereinheit 260A, 260B, 260C der Einspeiseeinrichtung 300 zur Verfügung gestellte elektrische Energie in Wechselstrom umzuwandeln. Ausserdem ist die Einspeiseeinrichtung 300 an ein hier nicht gezeigtes Stromnetz angeschlossen, um den Wechselstrom in das Stromnetz einzuspeisen.

Die Einspeiseeinrichtung 300 ist ausserdem eine Elektrofahrzeugtankstelle zum Tanken von Elektrofahrzeugen mit von der an den Speichereinheitsanschluss 360 angeschlossenen Speichereinheit 260A, 260B, 260C der Einspeiseeinrichtung 300 zur Verfügung gestellter elektrischer Energie. Die Elektrofahrzeuge sind dabei wenigstens eines von Elektrofahrräder, d.h. elektrisch angetriebene Fahrräder, Elektromotorräder, d.h. elektrisch angetriebene Motorräder, Elektroautos, d.h. elektrisch angetriebene Personenkraftwagen, Elektrobusse, d.h. elektrisch angetriebene Omnibusse und Elektrolastwagen, d.h. elektrisch angetriebene Lastkraftwagen.

Die Anordnung 500 umfasst ausserdem ein Fahrzeug 510 zum Transport einer Speichereinheiten 260A, 260B, 260C der Windturbine 100 von der Windturbine 100 zur zur Annahmeeinrichtung 320 der Einspeiseeinrichtung 300 und damit zur Einspeiseeinrichtung 300 und zum Transport der Speichereinheit 260A, 260B, 260C der Windturbine 100 von der Annahmeeinrichtung 320 der Einspeiseeinrichtung 300 und damit von der Einspeiseeinrichtung 300 zur Windturbine 100. Das Fahrzeug 510 ist ein Fahrzeug mit einem Elektroantrieb und damit ein motorisiertes Fahrzeug.

Das Fahrzeug 510 umfasst Mittel zum Anbringen und damit zum Anordnen einer mit dem Fahrzeug 510 transportierten Speichereinheit 260A, 260B, 260C an einem der zumindest drei Tragarme 240. Das Mittel zum Anbringen und damit zum Anordnen einer mit dem Fahrzeug 510 transportierten Speichereinheit 260A, 260B, 260C an einem der zumindest drei Tragarme 240 ist zugleich ein Mittel zum Anbringen und damit zum Anschliessen einer mit dem wenigstens einen Fahrzeug 510 transportierten Speichereinheit260A, 260B, 260C am Speichereinheitsanschluss 360 der Annahmeeinrichtung 320.

Weiter umfasst das Fahrzeug 510 Mittel zum Entfernen einer am einen der zumindest drei Tragarme 240 angeordneten Speichereinheit 260A, 260B, 260C vom jeweiligen Tragarm 240. Das Mittel zum Entfernen einer am einen der zumindest drei Tragarme 240 angeordneten Speichereinheit 260A, 260B, 260C vom jeweiligen Tragarm 240 ist zugleich ein Mittel zum Entfernen und damit zum Trennen einer mit dem wenigstens einen Fahrzeug 510 transportierten Speichereinheit 260A, 260B, 260C vom Speichereinheitsanschluss 360 der Annahmeeinrichtung320.

Die Anordnung 500 kann anstelle der anhand von Figur 1 beschriebenen Windturbine 100 auch eine beliebige andere erfindungsgemässe Windturbine umfassen.

Zusammenfassend ist festzustellen, dass die vorgehend beschriebene Windturbine mit in den erwähnten Varianten und Variationen eine dem eingangs genannten technischen Gebiet zugehörende Windturbine zur Stromerzeugung ist, welche einfacher zu installieren ist.

## Patentansprüche

1. Windturbine (100) zur Stromerzeugung, umfassend:
zumindest einen durch Wind antreibbaren Rotor (110),
einen mit dem Rotor (110) verbundenen Generator (120) zur Umwandlung von mechanischer Leistung des durch den Wind angetriebenen Rotors (110) in elektrische Leistung und damit zur Stromerzeugung,
ein Fahrwerk (200) zum Fortbewegen der Windturbine (100), und
eine Ausrichteeinrichtung (210) zum Ausrichten der Windturbine (100) in eine aufrechte Ausrichtung beim Fortbewegen der Windturbine (100) mit dem Fahrwerk (200),
und eine Basiskonsole (220) welche mit dem Fahrwerk (200) gelenkartig verbunden ist, **dadurch gekennzeichnet dass** das Fahrwerk (200) zumindest drei Tragarme (240) umfasst, welche jeweils mit der Basiskonsole (220) verbunden sind, und das Fahrwerk (200) mindestens einen Antrieb (250) zum Bewegen der Tragarme (240) relativ zur Basiskonsole (220) aufweist.

2. Windturbine (100) gemäss Anspruch 1, **dadurch gekennzeichnet, dass** die Ausrichteeinrichtung (210) eine Messeinheit zum Messen einer Abweichung der Ausrichtung der Windturbine (100) von der aufrechten Ausrichtung umfasst.

3. Windturbine (100) gemäss Anspruch 1 oder 2, **dadurch gekennzeichnet, dass** die Ausrichteeinrichtung (210) eine Blockiereinheit zum unmittelbaren Blockieren des Rotors (110) aufweist.

4. Windturbine (100) gemäss einem der vorstehenden Ansprüche, **dadurch gekennzeichnet, dass** der Generator (120) und der Rotor (110) an der Basiskonsole (220) angeordnet sind.

5. Windturbine (100) gemäss einem der vorstehenden Ansprüche, **dadurch gekennzeichnet, dass** die Basiskonsole (220) in der aufrechten Ausrichtung der Windturbine (100) derart ausgerichtet ist, dass sich der Rotor (110) in einem oberen Bereich der Basiskonsole (220) befindet.

6. Windturbine (100) gemäss einem der vorstehenden Ansprüche, **dadurch gekennzeichnet, dass** das Fahrwerk (200) mindestens ein Schreitwerk (230) aufweist.

7. Windturbine (100) gemäss Anspruch 1, **dadurch gekennzeichnet, dass** jedem Tragarm (240) ein Schreitwerk (230) zugeordnet ist.

8. Windturbine (100) gemäss einem der vorstehenden Ansprüche 1 bis 7, **dadurch gekennzeichnet, dass** die Ausrichteeinrichtung (210) dazu ausgebildet ist, die Ausrichtung der Basiskonsole (220) mittels Betätigung des zumindest einen Antriebs (250) anzupassen, um die Windturbine (100) in die aufrechte Ausrichtung auszurichten.

9. Windturbine (100) gemäss einem der vorstehenden Ansprüche, **dadurch gekennzeichnet, dass** die Windturbine (100) einen Speicher (260) zum Speichern von vom Generator (120) umgewandelten elektrische Energie aufweist.

10. Windturbine (100) gemäss Anspruch 9, **dadurch gekennzeichnet, dass** der Speicher (260) eine Mehrzahl an Speichereinheiten (260A, 260B, ..) zum Speichern der vom Generator (120) umgewandelten, elektrischen Energie umfasst, wobei an jedem Tragarm (240) eine Speichereinheit (260A, 260B, ...) anordenbar ist.

11. Windturbine (100) gemäss einem der Ansprüche 9 oder 10, **dadurch gekennzeichnet, dass** die Speichereinheiten (260A, 260B, ...) auswechselbar ausgebildet sind.

12. Windturbine (100) gemäss einem der vorstehenden Ansprüche 9 bis 11, **dadurch gekennzeichnet, dass** der Speicher (260) eine Schnittstelle zur Versorgung eines Verbrauchers mit elektrischem Strom aufweist.

## Claims

1. Wind turbine (100) for generating electricity, comprising:
at least one rotor (110) which is configured to be driven by wind,
a generator (120), which is connected to the rotor (110), for converting mechanical power of the wind-driven rotor (110) into electrical power and thereby for generating electricity,
a chassis (200) for moving the wind turbine (100), and
a positioning device (210) for positioning the wind turbine (100) in an upright position when the wind turbine (100) is moved with the chassis (200), and
a base console (220), which is connected to the chassis (200) in an articulated manner,
**characterized in that** the chassis (200) comprises at least three support arms (240), which are each connected to the base console (220), and the chassis (200) comprises at least one drive (250) for moving the support arms (240) relative to the base console (220).

2. Wind turbine (100) according to claim 1, **characterized in that** the positioning device (210) comprises a measuring unit for measuring a deviation of the position of the wind turbine (100) from the upright position.

3. Wind turbine (100) according to claim 1 or 2, **characterized in that** the positioning device (210) comprises a blocking unit for directly blocking the rotor (110).

4. Wind turbine (100) according to one of the preceding claims, **characterized in that** the generator (120) and the rotor (110) are arranged on the base console (220).

5. Wind turbine (100) according to one of the preceding claims, **characterized in that**, when the wind turbine (100) is in an upright position, the base console (220) is positioned in such a way that the rotor (110) is located in an upper region of the base console (220).

6. Wind turbine (100) according to one of the preceding claims, **characterized in that** the chassis (200) comprises at least one walking mechanism (230).

7. Wind turbine (100) according to claim 1, **characterized in that** each support arm (240) is assigned a walking mechanism (230).

8. Wind turbine (100) according to one of the preceding claims 1 to 7, **characterized in that** the positioning device (210) is configured to adjust the position of the base console (220) by actuating the at least one drive (250) in order to position the wind turbine (100) in the upright position.

9. Wind turbine (100) according to one of the preceding claims, **characterized in that** the wind turbine (100) comprises a storage device (260) for storing electrical energy converted by the generator (120).

10. Wind turbine (100) according to claim 9, **characterized in that** the storage device (260) comprises a plurality of storage units (260A, 260B, ...) for storing the electrical energy converted by the generator (120), wherein a storage unit (260A, 260B, ...) is configured to be arranged on each support arm (240).

11. Wind turbine (100) according to one of claims 9 or 10, **characterized in that** the storage units (260A, 260B, ...) are configured to be replaceable.

12. Wind turbine (100) according to one of the preceding claims 9 to 11, **characterized in that** the storage device (260) comprises an interface for supplying a consumer with electrical current.

## Revendications

1. Eolienne (100) pour la production d'électricité, comprenant :
au moins un rotor (110) configuré de manière à pouvoir être entraîné par le vent,
un générateur (120) connecté au rotor (110) pour convertir la puissance mécanique du rotor (110) entraîné par le vent en puissance électrique et, par conséquent, pour produire de l'électricité,
un châssis (200) pour déplacer l'éolienne (100), et
un dispositif de positionnement (210) pour orienter l'éolienne (100) dans une position verticale au cours du déplacement de l'éolienne (100) à l'aide du châssis (200), et
une console de base (220) qui est connectée de manière articulée au châssis (200),
**caractérisée en ce que** le châssis (200) comprend au moins trois bras de support (240) qui sont chacun connectés à la console de base (220), et le châssis (200) présente au moins un entraînement (250) pour déplacer les bras de support (240) par rapport à la console de base (220).

2. Eolienne (100) selon la revendication 1, **caractérisée en ce que** le dispositif de positionnement (210) comprend un module de mesure pour mesurer un écart de l'orientation de l'éolienne (100) par rapport à la position verticale.

3. Eolienne (100) selon la revendication 1 ou 2, **caractérisée en ce que** le dispositif de positionnement (210) présente une unité de blocage pour bloquer directement le rotor (110).

4. Eolienne (100) selon l'une des revendications précédentes, **caractérisée en ce que** le générateur (120) et le rotor (110) sont disposés sur la console de base (220).

5. Eolienne (100) selon l'une des revendications précédentes, **caractérisée en ce que**, lorsque l'éolienne (100) est en position verticale, la console de base (220) est positionnée de telle sorte que le rotor (110) se trouve dans une zone supérieure de la console de base (220).

6. Eolienne (100) selon l'une des revendications précédentes, **caractérisée en ce que** le châssis (200) présente au moins un mécanisme de marche (230).

7. Eolienne (100) selon la revendication 1, **caractérisée en ce qu'**un mécanisme de marche (230) est associé à chacun des bras de support (240).

8. Eolienne (100) selon l'une des revendications précédentes 1 à 7, **caractérisée en ce que** le dispositif de positionnement (210) est configuré de manière à adapter l'orientation de la console de base (220) au moyen de l'actionnement de l'au moins un entraînement (250) afin d'orienter l'éolienne (100) dans la position verticale.

9. Eolienne (100) selon l'une des revendications précédentes, **caractérisée en ce que** l'éolienne (100) présente un accumulateur (260) pour stocker l'énergie électrique convertie par le générateur (120).

10. Eolienne (100) selon la revendication 9, **caractérisée en ce que** l'accumulateur (260) comprend une pluralité d'unités d'accumulation (260A, 260B, ...) pour stocker l'énergie électrique convertie par le générateur (120), dans laquelle une unité d'accumulation (260A, 260B, ...) est configurée de manière à pouvoir être disposée sur chacun des bras de support (240).

11. Eolienne (100) selon l'une des revendications 9 ou 10, **caractérisée en ce que** les unités d'accumulation (260A, 260B, ...) sont remplaçables.

12. Eolienne (100) selon l'une des revendications précédentes 9 à 11, **caractérisée en ce que** l'accumulateur (260) présente une interface pour alimenter un consommateur en courant électrique.
